# EUROPÄISCHE PATENTSCHRIFT

(11) **EP 2 220 706 B1**
(45) Veröffentlichungstag und Bekanntmachung des Hinweises auf die Patenterteilung: **10.07.2013**
(21) Anmeldenummer: 08860870.8
(22) Anmeldetag: 02.10.2008
(51) Int. Cl.: H01M 2/38, H01M 2/02, H01M 10/42

(54) **AKKUMULATOR**
ACCUMULATOR
ACCUMULATEUR

(30) Priorität: 18.12.2007 DE 102007061662
(43) Veröffentlichungstag der Anmeldung: 25.08.2010
(73) Patentinhaber: VB Autobatterie GmbH & Co. KGaA, 30419 Hannover (DE)
(72) Erfinder: KOCH, Ingo, 31789 Hameln (DE); KÖRBER, Arne, 10585 Berlin (DE); BREMER, Dirk, 31535 Neustadt (DE)
(74) Vertreter: Günther, Constantin
(86) Internationale Anmeldenummer: PCT/EP2008/008367
(87) Internationale Veröffentlichungsnummer: WO 2009/077022

(56) Entgegenhaltungen:
- DE-C- 78 061
- US-A- 529 199

## Beschreibung

Die Erfindung betrifft einen Akkumulator mit einem Akkumulatorgehäuse, das mindestes einen Zellraum hat, mit mehreren Elektroden und mit flüssigen Elektrolyten in jedem Zellenraum, und mit jeweils mindestens einem Wandelement in den Zellenräumen zur Unterteilung der Zellenräume in jeweils mindestens zwei miteinander kommunizierende Volumenräume, wobei im unteren Bereich der Volumenräume eine kommunizierende Verbindung zwischen den Volumenräumen für den flüssigen Elektrolyten und im oberen Bereich der Volumenräume eine Druckausgleichsverbindung zwischen den Volumenräume zur Sicherstellung eines gleichen Luftdrucks in den miteinander kommunizierenden Volumenräumen besteht.

US 4,963,444 A und US 5,096,787 A offenbaren eine Bleibatterie mit einem in mehrere Zellräume aufgeteilten Gehäuse. In den Zellräumen sind bleihaltige Elektrolytplattenstapel aufgenommen, die durch Separatoren voneinander getrennt sind. Zudem ist in die Zellenräumen flüssiger Elektrolyt eingefüllt, der insbesondere Schwefelsäure enthält.

Im Betrieb kann es zu einer ungleichförmigen Verteilung der Säurekonzentration über die Höhe des Akkumulators kommen, was zu einer Reduzierung der Speicherkapazität des Akkumulators führt. Daher ist es erwünscht, den flüssigen Elektrolyten im Betrieb zu mischen. Hierzu wird durch Wandelemente angrenzend an Seitenwänden des Akkumulatorgehäuses eine hydrostatische Pumpe geschaffen. Bei Bewegung des Akkumulators schwappt Elektrolyt über die Oberkante der Wände in den durch eine Wand abgegrenzten Volumenraum, so dass in diesem Volumenraum der Elektrolytspiegel höher als im angrenzenden Volumenraum ist. Bei der Bewegung fließt zusätzlich Elektrolyt durch eine Öffnung im unteren Bereich in den durch das Wandelemente abgrenzenden Volumenraum. Der in diesem Volumenraum nunmehr höhere Elektrolytspiegel führt zu einem hydrostatischen Überdruck in dem Volumenraum, so dass Elektrolyt aus dem überfüllten Volumenraum in den angrenzenden Volumenraum wieder abfließt. Durch die hydrostatische Pumpe wird somit eine zirkulierende Elektrolytbewegung erzwungen.

Auch DE78061 offenbart ein derartiges galvanisches Element.

Die zirkulierende Elektrolytbewegung hat allerdings den Nachteil, dass sich im unteren Bereich absetzender Schlamm und Partikel aufgewirbelt und in den Bereich oberhalb der Separatoren bewegt werden. Hierdurch ist die Kurzschlussgefahr erhöht

US 529,199 offenbart ein Akkumulatorensystem, bei dem Fluid über eine Pumpeinrichtung in Zirkulation versetzt wird. In einer Ausführungsform werden Akkumulatoren auf einer Wippe gelagert, um mit Hilfe von Ableitelementen und Rinnen eine Umwälzung des Elektrolyts zu erreichen.

Ausgehend hiervon ist es Aufgabe der vorliegenden Erfindung, einen verbesserten Akkumulator mit einem Akkumulatorgehäuse der eingangs genannten Art zu schaffen, bei dem im Betrieb der Bildung von Säureschichtung effektiv entgegengewirkt wird, während bereits abgelagerter Schlamm nicht in den oberen Zellraum verbracht wird.

Die Aufgabe wird mit dem Akkumulator der eingangs genannten Art dadurch gelöst, dass sich die Wandelemente mindestens soweit nach oben erstrecken, dass bei Bewegungsbeanspruchung des Akkumulators in einem ersten Schritt Elektrolyt in mindestens einen Volumenraum über die kommunizierende Verbindung im unteren Bereich fließt und im zweiten Schritt Elektrolyt wieder über die kommunizierende Verbindung im unteren Bereich aus diesen mindestens einen Volumenraum abfließt, ohne dass ein Überfließen von flüssigen Elektrolyten von einem Volumenraum zum angrenzenden Volumenraum über die Oberkante der Wandelemente erfolgt

Im Unterschied zu den bekannten Ausführungsformen wird mit Hilfe des Prinzips einer kommunizierenden Röhre eine Hin- und Herbewegung des Elektrolyten über die kommunizierende Verbindung im unteren Bereich der Volumenräume erzwungen und kein Umwälzen des Elektrolyten. Es hat den Vorteil, dass sich am Boden ansammelnder Schlamm dort bleibt, da keine Umwälzung des Elektrolyts erfolgt. Die bei einer solchen kommunizierenden Röhre erzwungene Elektrolytbewegung ist ausreichend, um eine Säureschichtung aufzuheben.

Entscheidend hierfür ist, dass die Wandelemente soweit in Richtung zum die Zellenräume abschließenden Deckel hochgezogen sind, dass bei einer Bewegung des Akkumulators im Normalbetrieb, das heißt bei Kippen und Beschleunigen beziehungsweise Verzögern des Akkumulators keine wesentlichen Elektrolytmengen über die Wandelemente in den benachbarten Volumenraum überfließen.

Die Funktionsfähigkeit der kommunizierenden Röhren kann zudem nur sichergestellt werden, wenn ein Druckausgleich im oberen Bereich der Volumenräume untereinander erfolgt, so dass der Luftdruck auf das in den Volumenräumen befindliche Elektrolyt annähernd gleich ist. Hierzu ist eine Druckausgleichsverbindung zwischen den Volumenräumen vorgesehen.

Im Normalbetrieb beträgt der Winkel einer durch die Wandelemente jeweils definierten Ebene und dem Elektrolytspiegel in Ruhelage annähernd 90°. Ein Normalbetrieb ist dann immer noch gegeben, wenn der Winkel zwischen Elektrolytspiegel und der durch ein Wandelement definierten Ebene auf 83° und vorzugsweise auf 80° und besonders bevorzugt auf bis 70° verringert wird. Bis zu einer solchen Schrägstellung des Elektrolytspiegels soll ein Überfließen von Elektrolyt über die Oberkante der Wandelemente unterbunden werden, um bei einer solchen Normalbelastung den Effekt der kommunizierenden Röhren zu erzielen.

Entsprechend sollen sich somit die Wandelemente soweit nach oben erstrecken, dass bei einer vom Hersteller vorgegebenen Sollfüllhöhe des Elektrolyten ein Überfließen von Elektrolyt bis zu einem Winkel von mindestens 7° zwischen dem aktuellen Elektrolytspiegel und einem im Akkumulatorengehäuse definierten Normalelektrolytspiegel verhindert wird. Dieser Winkel beträgt in einer bevorzugten Ausführungsform mindestens 10° und in einer besonders bevorzugten Ausführungsform mindestens 20°.

Vorteilhaft ist es, wenn unmittelbar benachbart zu einer vertikalen Zellenraumwand ein Wandelement so angeordnet ist, dass sich ein vertikaler Wandabschnitt über die Höhe der im Zellenraum aufgenommenen plattenförmigen Elektroden hinaus erstreckt und ein horizontaler Wandabschnitt oberhalb der Elektrodenplatten vom vertikalen Wandabschnitt abgeht. Bei einer solchen Ausführungsform kann sich von dem horizontalen Wandabschnitt ein weiterer vertikaler Wandabschnitt gegenüberliegend zu den Elektroden in Richtung Deckelabschnitt des Zellenraums erstrecken. Hierdurch wird ein Speicherraum oberhalb der Elektrodenplatten geschaffen, in den Elektrolyt sammeln kann, der vom unteren Bereich in den Volumenraum bei einer Hinbewegung des Akkumulators einströmt. Bei einer Rückbewegung oder nachfolgendem Stillstand des Akkumulators fließt das sich in dem Sammelraum angesammelte Elektrolyt dann wieder nach unten über den unteren Bereich der miteinander kommunizierenden Volumenräume in die angrenzenden Volumenräume ab. Hierdurch wird ein Hin- und Her- Strom des Elektrolyten erzwungen, der durch Turbulenz zu einer Vermischung führt.

In einer vorteilhaften Ausführungsform sind, insbesondere wenn die Elektrodenplatten eng aneinander liegen und nur einen vernachlässigbaren Säuredurchtritt erlauben, die Volumenräume teilweise durch aneinander anliegende Seitenkanten der gestapelten Elektrodenplatten abgeteilt. Die Seitenkanten der durch Separatoren voneinander getrennten Elektrodenplatten bilden zusammen mit diesen Separatoren somit einen Teil der Wandelemente.

Die Wandelemente können sich zwischen zwei sich gegenüberliegenden Seitenwänden der Zellenräume erstrecken und dicht mit diesen Seitenwänden verbunden sein. Auf diese Weise wird ein Volumenraum in eine definierte Kipprichtung abgegrenzt. Vorzugsweise erstrecken sich die Wandelemente zwischen den eng benachbarten Seitenwänden eines rechteckförmigen Zellenraumes.

Die Zellenräume können jeweils zwei sich gegenüberliegende Wandelemente zur Schaffung von Volumenräumen in den gegenüberliegenden Seitenwänden angrenzenden Zellenraumabschnitten haben. Damit werden die kommunizierenden Röhren bei einer Hin- und Rückbewegung an beiden gegenüberliegenden Zellenraumabschnitten aktiv, wobei bei einem Zellenraumabschnitt bei einer Hinbewegung der Speicherraum gefüllt und gleichzeitig in dem gegenüberliegenden Volumenraum der Speicherraum geleert wird. Bei der Rückbewegung ist der Vorgang entsprechend umgekehrt.

Die Wandelemente können dicht mit einem angrenzenden, die Zellenräume jeweils oben abschließenden Deckelteil des Akkumulatorengehäuses verbunden sein. Damit wird ein Überschießen von Elektrolyt über die Oberkanten der Wandelemente vollständig verhindert. Bei einer solchen Ausführungsform muss jedoch eine Druckausgleichsverbindung vorhanden sein, die z. B. über Bohrungen erfolgt, die von dem Volumenraum durch das Deckelteil hindurchgeführt sind.

Die Erfindung wird nachfolgend anhand eines Ausführungsbeispiels mit den beigefügten Zeichnungen näher erläutert. Es zeigen:
- Figur 1: - Schnittansicht durch einen Akkumulator mit zwei durch einen Wandelement abgetrennten Volumenräumen
- Figur 2a) und b): - Akkumulator aus Figur 1 in zwei entgegengesetzten Kippstellungen;
- Figur 3: - Skizze eines nach oben hin abgewinkelten Wandelementes in einem Akkumulatorgehäuse;
- Figur 4: - Skizze eines oberhalb eines Elektrodenplattenstapels angeordneten Wandelementes.

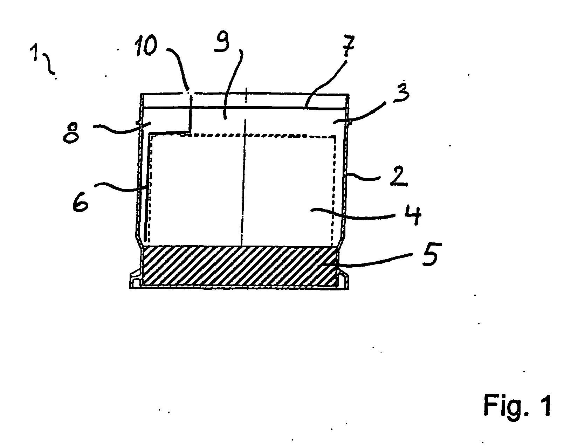

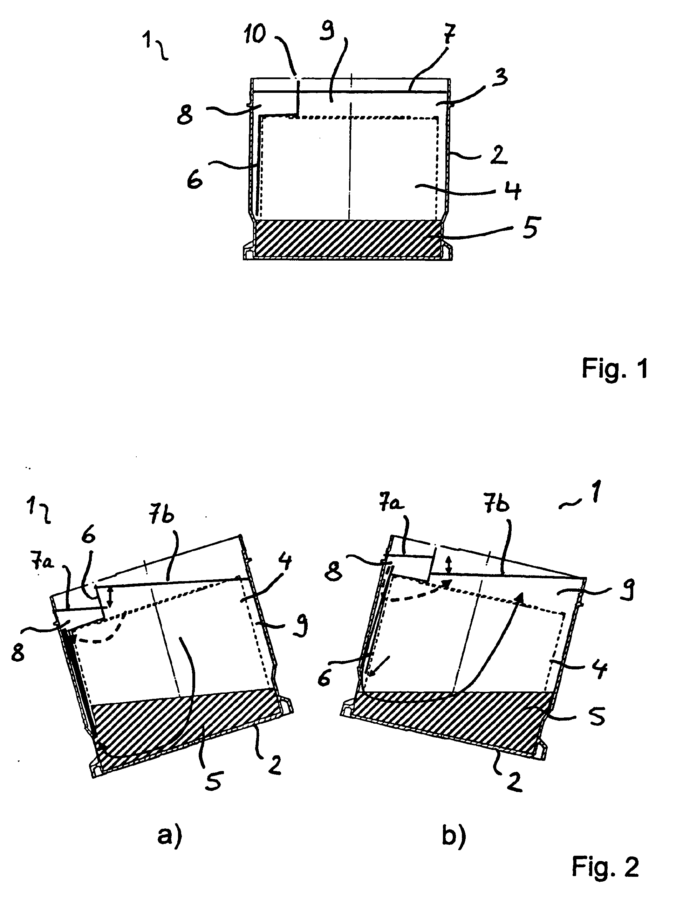

Figur 1 lässt eine Schnittansicht eines Akkumulators 1 erkennen, der in an sich bekannter Weise einen Akkumulatorgehäuse 2 hat, das durch einen Deckel (nicht dargestellt) in an sich bekannter Weise abgeschlossen ist. In dem beispielsweise als Doppeldeckel mit einem oberen und einem unteren Deckelteil mit zwischenliegenden Stegen ausgeführten Deckel können in an sich bekannter Weise Entgasungskanäle ausgebildet sein.

Das Akkumulatorgehäuse 2 ist in Zellenräume aufgeteilt, wobei der Schnitt in Figur 1 einen solchen Zellenraum 3 zeigt. In die Zellenräume 3 sind plattenförmige Elektroden 4 durch Separatoren voneinander getrennt aneinander angrenzend aufgestapelt. Die Elektrodenplatten 4 können dabei in Separatorentaschen eingesteckt sein. Ein solcher Elektrodenplattenstapel hat abwechselnd positive und negative Elektrodenplatten.

Die Zellenräume 3 sind mit flüssigen Elektrolyten, insbesondere mit Schwefelsäure gefüllt, um zusammen mit den Elektroden 4 ein galvanisches Element zu bilden. Der Bereich 5 stellt Elektrolyt mit erhöhter Konzentration dar.

In den Zellenräumen 3 ist mindestens ein Wandelement 6 eingebaut, das sich nach oben über den Elektrolytspiegel 7 bei der vom Hersteller vorgegebenen Nennfüllhöhe erstreckt. Das Wandelement 6 hat beispielsweise einen ersten, sich parallel zu einer Seitenkante der Elektrodenplatten 4 erstreckenden Abschnitt, einen oberhalb der Elektrodenplatten 4 im Winkel, zum Beispiel quer, abgehenden horizontalen Abschnitt und einen sich daran anschließenden senkrechten, durch den Elektrolytspiegel 7 bei Nennfüllhöhe hindurchstoßenden Endabschnitt. Auf diese Weise wird auf der linken Seite des Zellenraums 3 ein erster Volumenraum 8 abgegrenzt, der im oberen Bereich einen Speicherraum aufweist. Von dem ersten Volumenraum 8 befindet sich ein zweiter Volumenraum 9 abgegrenzt durch das Wandelement auf der rechten Seite des Zellenraums 3.

Der erste Volumenraum 8 und der zweiter Volumenraum 9 sind miteinander im unteren Bereich kommunizierend verbunden. Hierzu kann in einem bevorzugten Ausführungsbeispiel vorgesehen sein, dass sich das Wandelement 6 nicht vollständig bis zur schräg nach innen zulaufenden Kante des Akkumulatorengehäuses 2 im unteren Bereich erstreckt. Denkbar ist aber auch, dass das Wandelement 6 im unteren Bereich integral mit dem Akkumulatorengehäuse 2 geformt ist und Öffnungen im unteren Bereich des Wandelementes 6 vorgesehen sind, durch die Elektrolyt von dem ersten Volumenraum 8 in den zweiten Volumenraum 9 und umgekehrt strömen kann.

Wesentlich ist, dass sich das Wandelement 6 nach oben über den Elektrolytspiegel 7 mindestens soweit hinaus erstreckt, dass im Normalbetrieb keine wesentliche Elektrolytmenge über die Oberkante des Wandelementes 6 hinüber fließt.

Zudem ist durch Öffnungen 10 im oberen Bereich der Volumenräume 8, 9 sichergestellt, dass eine Druckausgleichsverbindung zwischen dem Volumenraum 8, 9 geschaffen wird, so dass der Luftdruck im oberen Bereich der Volumenräume 8, 9 gleich ist.

Auf diese Weise wird ein System kommunizierender Röhren geschaffen. Kommunizierende Röhren beziehungsweise kommunizierende Gefäße sind oben offen, aber unten miteinander verbundene Gefäße, in denen die Flüssigkeit unabhängig von dem Volumen der miteinander kommunizierenden Gefäße im ausgeglichenen Zustand so hoch stehen, wie es die spezifischen Dichten vorgeben.

Figur 2 zeigt den Akkumulator 1 aus Figur 1 in zwei entgegengesetzten Kippstellungen. In Figur 2a) ist der Akkumulator nach links gekippt, was zu unterschiedlichen Elektrolytspiegeln 7a, 7b im ersten Volumenraum 8 und zweiten Volumenraum 9 führt. Aufgrund der Differenz d zwischen den beiden Elektrolytspiegeln 7a, 7b erfolgt ein Ausgleich in den Volumenräumen derart, dass Elektrolyt von unten über die kommunizierende Verbindung zwischen dem ersten und zweiten Volumenraum 8, 9 im unteren Bereich vom zweiten Volumenraum 9 in den ersten Volumenraum 8 strömt. Dadurch wird höher konzentriertes Elektrolyt (Bereich 5) nach oben befördert und vermischt sich dort mit dem Niederkonzentrierten.

Beim Zurückkippen in die entgegengesetzte Kipplage gemäß Figur 2b) ist der Elektrolytspiegel 7a im ersten Volumenraum 8 höher als der Elektrolytspiegel 7b im zweiten Volumenraum 9. Dies führt dazu, dass das im ersten Volumenraum 8 gespeicherte Elektrolyt teilweise über die kommunizierende Verbindung im unteren Bereich der Volumenräume 8, 9 wieder zurück in den zweiten Volumenraum 9 fließt. Durch diese Strömung wird ein Wirbel erzeugt, der zur Durchmischung von hochkonzentriertem (Bereich 5) und dem restlichen Elektrolyt führt.

Die Flussrichtung im unteren Bereich der Volumenräume 8, 9 ist durch die Pfeile angedeutet.

Wesentlich ist, dass durch die Wandelemente 6 ein durch die gestrichelten Pfeile angedeutetes Hin- und Herfließen von Elektrolyt im oberen Bereich des Elektrolytniveaus verhindert wird.

Für das ausgenutzte Funktionsprinzip ist es weiterhin entscheiden, dass die Wandelemente 6 ausreichend hoch gezogen sind, damit keine wesentlichen Elektrolytmengen über die Oberkante der Wandelemente von einem Volumenraum in den angrenzenden Volumenraum fließen können. Dadurch wird sichergestellt, dass ein Elektrolytfluss nur über die kommunizierende Verbindung im unteren Bereich der Volumenräume 8, 9 erfolgt. Dies hat den Vorteil, dass im unteren Bereich anfallende Schlamm- und Partikelreste nicht in eine Zirkulation versetzt werden und so die Kurzschlussgefahr erhöhen könnte.

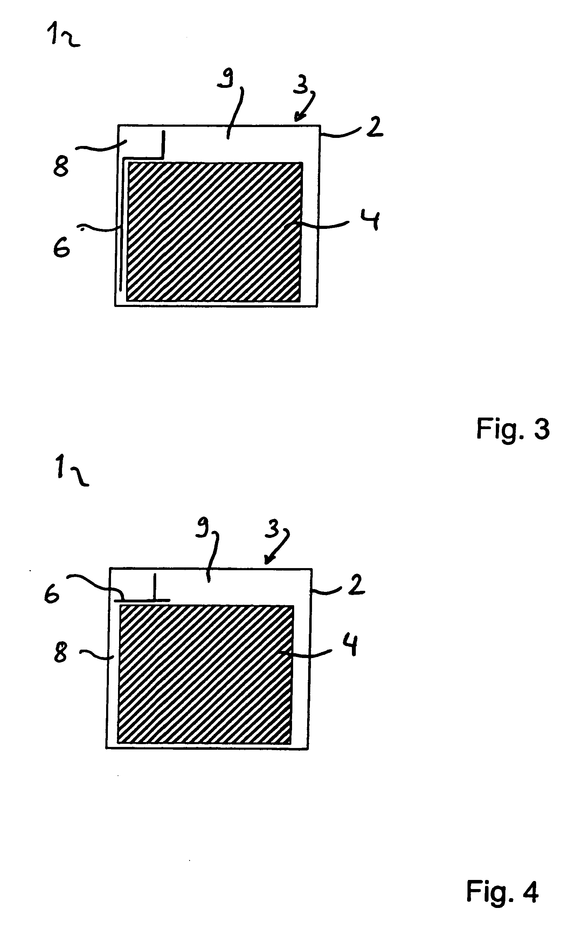

Figur 3 lässt eine Skizze des oberhalb der Elektrodenplatten 4 abgewinkelten Wandelementes erkennen, das an dem abgewinkelten Ende einen senkrecht nach oben gehenden Abschnitt hat. Das Wandelement 6 erstreckt sich an einer Seitenkante der Elektrodenplatten entlang über einen wesentlichen Teil der Höhe der Elektrodenplatten 4. Ein entsprechendes Wandelement kann auch auf der gegenüberliegenden Seite zusätzlich zu dem dargestellten Wandelement angeordnet sein, um zwei seitliche Volumenräume von einem mittleren Volumenraum 9 abzugrenzen.

Vorteilhaft ist es, wenn sich die Wandelemente zwischen den nah voneinander beabstandeten Seitenwänden eines Zellenraums 3 erstrecken, das heißt nicht parallel zu den Elektrodenplatten 4.

Figur 4 lässt eine andere Ausführungsform eines Wandelementes 6 erkennen, bei dem ein Teil des Wandelementes durch die Seitenkanten der Elektrodenplatten 4 gebildet ist. Das Wandelement hat somit nur einen oberhalb der Elektrodenplatten 4 angeordneten horizontalen Abschnitt und einen davon abgehenden vertikalen Abschnitt, der sich nach oben in Richtung Deckel (nicht dargestellt) des Akkumulatorengehäuses 2 erstreckt.

## Patentansprüche

1. Akkumulator (1) mit einem Akkumulatorgehäuse (2), das mindestes zwei Zellräume hat, mit mehreren Elektroden (4) und mit flüssigen Elektrolyten in jedem Zellenraum (3), und mit jeweils mindestens einem Wandelement (6) in den Zellenräumen (3) zur Unterteilung der Zellenräume (3) in jeweils mindestens zwei miteinander kommunizierende Volumenräume (8, 9), wobei im unteren Bereich der Volumenräume (8, 9) eine kommunizierende Verbindung zwischen den Volumenräumen (8, 9) für den flüssigen Elektrolyten und im oberen Bereich der Volumenräume (8, 9) eine Druckausgleichsverbindung zwischen den Volumenräumen (8, 9) zur Sicherstellung eines gleichen Luftdrucks in den miteinander kommunizierenden Volumenräumen (8, 9) besteht, **dadurch gekennzeichnet, dass** sich die Wandelemente (6) mindestens so weit nach oben erstrecken, dass bei Bewegungsbeanspruchung des Akkumulators (1) in einem ersten Schritt Elektrolyt in mindestens einen Volumenraum (8; 9) über die kommunizierende Verbindung im unteren Bereich fließt und im zweiten Schritt Elektrolyt wieder über die kommunizierende Verbindung im unteren Bereich aus diesem mindestens einen Volumenraum (8, 9) abfließt, ohne dass ein Überfließen von flüssigem Elektrolyten von einem Volumenraum zum angrenzenden Volumenraum (8, 9) über die Oberkante der Wandelemente (6) erfolgt.

2. Akkumulator (1) nach Anspruch 1, **dadurch gekennzeichnet, dass** sich die Wandelemente (6) so weit nach oben erstrecken, dass ein Überfließen von Elektrolyt bis zu einem Winkel von mindestens 7° zwischen dem aktuellen Elektrolytspiegel (7) und einem definierten Normalelektrolytspiegel im waagerechten Zustand verhindert wird.

3. Akkumulator (1) nach Anspruch 2, **dadurch gekennzeichnet, dass** sich die Wandelemente (6) so weit nach oben erstrecken, dass ein Überfließen von Elektrolyt bis zu einem Winkel von mindestens 10° zwischen dem aktuellen Elektrolytspiegel (7) und einem definierten Normalelektrolytspiegel im waagerechten Zustand verhindert wird.

4. Akkumulator (1) nach Anspruch 2, **dadurch gekennzeichnet, dass** sich die Wandelemente (6) so weit nach oben erstrecken, dass ein Überfließen von Elektrolyt bis zu einem Winkel von mindestens 20° zwischen dem aktuellen Elektrolytspiegel (7) und einem definierten Normalelektrolytspiegel im waagerechten Zustand verhindert wird.

5. Akkumulator (1) nach einem der vorhergehenden Ansprüche, **dadurch gekennzeichnet, dass** durch einen Spalt getrennt von einer vertikalen Zellenraumwand ein Wandelement (6) so angeordnet ist, dass sich ein vertikaler Wandabschnitt über die Höhe der im Zellenraum aufgenommenen plattenförmigen Elektroden (4) hinaus erstreckt und ein horizontaler Wandabschnitt oberhalb der Elektrodenplatten (4) vom vertikalen Wandabschnitt abgeht.

6. Akkumulator (1) nach Anspruch 5, **dadurch gekennzeichnet, dass** sich von dem horizontalen Wandabschnitt ein weiterer vertikaler Wandabschnitt gegenüberliegend zu den Elektroden (4) in Richtung Deckelabschluss des Zellenraums (3) erstreckt.

7. Akkumulator (1) nach einem der vorhergehenden Ansprüche, **dadurch gekennzeichnet, dass** die Volumenräume (8, 9) teilweise durch aneinander anliegende Seitenkanten der gestapelten Elektrodenplatten (4) abgeteilt sind, die Teil der Wandelemente (6) bilden.

8. Akkumulator (1) nach einem der vorhergehenden Ansprüche, **dadurch gekennzeichnet, dass** sich Wandelemente (6) zwischen zwei sich gegenüberliegenden Seitenwänden der Zellenräume (3) erstrecken und dicht mit diesen Seitenwänden verbunden sind.

9. Akkumulator (1) nach einem der vorhergehenden Ansprüche, **dadurch gekennzeichnet, dass** die Zellenräume (3) jeweils zwei Wandelemente (6) zur Schaffung von Volumenräumen (8, 9) in an Seitenwände angrenzenden Zellenraumabschnitten haben.

10. Akkumulator (1) nach einem der vorhergehenden Ansprüche, **dadurch gekennzeichnet, dass** die Wandelemente (6) dicht mit einem angrenzenden, die Zellenräume (3) jeweils oben abschließenden Deckelteil des Akkumulatorgehäuses (2) verbunden sind und die Druckausgleichsverbindung über von den Volumenräumen (8, 9) durch das Deckelteil hindurchgeführte Bohrungen erfolgt.

## Claims

1. A rechargeable battery (1) comprising a rechargeable battery housing (2) which has at least two cell areas, a plurality of electrodes (4) and liquid electrolytes in each cell area (3) and at least one wall element (6) in the cell areas (3) in order to subdivide the cell areas (3) into in each case at least two volume areas (8, 9) which communicate with one another, wherein there is a communicating connection in the lower area of the volume areas (8, 9), between the volume areas (8, 9) for the liquid electrolyte, and there is a pressure equalizing connection in the upper area of the volume areas (8, 9) between the volume areas (8, 9) in order to ensure that the air pressure is the same in the volume areas (8, 9) which communicate with one another, **characterized in that** the wall elements (6) extend at least so far upward that, in a first step, when a movement load is applied to the rechargeable battery (1), electrolyte flows into at least one volume area (8, 9) via the communicating connection in the lower area and, in the second step, electrolyte flows away out of this at least one volume area (8, 9) again via the communicating connection in the lower area, without liquid electrolyte overflowing from one volume area to the adjacent volume area (8, 9) over the upper edge of the wall elements (6).

2. The rechargeable battery (1) as claimed in claim 1, **characterized in that** the wall elements (6) extend so far upward that electrolyte cannot overflow between the current electrolyte level (7) and a defined normal electrolyte level in the horizontal state, up to an angle of at least 7[deg.].

3. The rechargeable battery (1) as claimed in claim 1, **characterized in that** the wall elements (6) extend so far upward that electrolyte cannot overflow between the current electrolyte level (7) and a defined normal electrolyte level in the horizontal state, up to an angle of at least 10[deg.].

4. The rechargeable battery (1) as claimed in claim 1, **characterized in that** the wall elements (6) extend so far upward that electrolyte cannot overflow between the current electrolyte level (7) and a defined normal electrolyte level in the horizontal state, up to an angle of at least 20[deg.].

5. The rechargeable battery (1) as claimed in claim 1, **characterized in that** a wall element (6) is arranged separated by a gap from a vertical cell area wall such that a vertical wall section extends over the height of the electrodes (4), which are in the form of plates and are held in the cell area, and a horizontal wall section originates from the vertical wall section above the electrode plates (4).

6. The rechargeable battery (1) as claimed in claim 5, **characterized in that** a further vertical wall section extends from the horizontal wall section, opposite the electrodes (4), in the direction of the cover closure of the cell area (3).

7. The rechargeable battery (1) as claimed in claim 1, **characterized in that** the volume areas (8, 9) are partially compartmentalized by side edges, which are adjacent to one another, of the stacked electrode plates (4), which form part of the wall elements (6).

8. The rechargeable battery (1) as claimed in claim 1, **characterized in that** wall elements (6) extend between two mutually opposite side walls of the cell areas (3) and are connected in a sealed manner to these side walls.

9. The rechargeable battery (1) as claimed in claim 1, **characterized in that** the cell areas (3) each have two wall elements (6) in order to create volume areas (8, 9) in cell area sections which are adjacent to side walls.

10. The rechargeable battery (1) as claimed in claim 1, **characterized in that** the wall elements (6) are connected in a sealed manner to an adjacent cover part of the rechargeable battery housing (2), which in each case closes the cell areas (3) at the top, and the pressure equalizing connection is made via holes which pass through the cover part form the volume areas (8, 9).

## Revendications

1. Accumulateur (1) comprenant un boîtier d'accumulateur (2) qui possède au moins deux espaces de cellule, comprenant plusieurs électrodes (4) et comprenant des électrolytes liquides dans chaque espace de cellule (3), et comprenant à chaque fois au moins un élément de paroi (6) dans les espaces de cellule (3) pour diviser les espaces de cellule (3) respectivement en au moins deux espaces de volume (8, 9) qui communiquent ensemble, une liaison communicante entre les espaces de volume (8, 9) pour les électrolytes liquides étant obtenue dans la zone inférieure des espaces de volume (8, 9) et une liaison d'équilibrage de pression entre les espaces de volume (8, 9) étant obtenue dans la zone supérieure des espaces de volume (8, 9) en vue de garantir une pression d'air identique dans les espaces de volume (8, 9) qui communiquent ensemble, **caractérisé en ce que** les éléments de paroi (6) s'étendent vers le haut au moins suffisamment loin pour que lorsqu'un mouvement est appliqué à l'accumulateur (1), dans une première étape, l'électrolyte dans au moins un espace de volume (8, 9) coule dans la zone inférieure par le biais de la liaison communicante et, dans une deuxième étape, l'électrolyte s'écoule de nouveau par le biais de la liaison communicante dans la zone inférieure depuis cet au moins un espace de volume (8, 9) sans qu'il ne se produise un débordement des électrolytes liquides d'un espace de volume vers l'espace de volume (8, 9) voisin par le bord supérieur des éléments de paroi (6).

2. Accumulateur (1) selon la revendication 1, **caractérisé en ce que** les éléments de paroi (6) s'étendent suffisamment vers le haut pour qu'un débordement de l'électrolyte soit empêché jusqu'à un angle d'au moins 7° entre la surface d'électrolyte (7) actuelle et une surface d'électrolyte normale définie en position horizontale.

3. Accumulateur (1) selon la revendication 2, **caractérisé en ce que** les éléments de paroi (6) s'étendent suffisamment vers le haut pour qu'un débordement de l'électrolyte soit empêché jusqu'à un angle d'au moins 10° entre la surface d'électrolyte (7) actuelle et une surface d'électrolyte normale définie en position horizontale.

4. Accumulateur (1) selon la revendication 2, **caractérisé en ce que** les éléments de paroi (6) s'étendent suffisamment vers le haut pour qu'un débordement de l'électrolyte soit empêché jusqu'à un angle d'au moins 20° entre la surface d'électrolyte (7) actuelle et une surface d'électrolyte normale définie en position horizontale.

5. Accumulateur (1) selon l'une des revendications précédentes, **caractérisé en ce qu'**un élément de paroi (6) séparé par un interstice d'une paroi d'espace de cellule verticale est disposé de telle sorte qu'une portion de paroi verticale s'étend au-delà de la hauteur des électrodes (4) en forme de plaque logées dans l'espace de cellule et une portion de paroi horizontale au-dessus des plaques d'électrode (4) se détache de la portion de paroi verticale.

6. Accumulateur (1) selon la revendication 5, **caractérisé en ce qu'**une portion de paroi verticale supplémentaire, opposée aux électrodes (4), s'étend à partir de la portion de paroi horizontale en direction du couvercle de fermeture de l'espace de cellule (3).

7. Accumulateur (1) selon l'une des revendications précédentes, **caractérisé en ce que** les espaces de volume (8, 9) sont en partie divisés par les arêtes latérales juxtaposées des plaques d'électrode (4) empilées, lesquelles forment une partie des éléments de paroi (6).

8. Accumulateur (1) selon l'une des revendications précédentes, **caractérisé en ce que** les éléments de paroi (6) s'étendent entre deux parois latérales mutuellement opposées des espaces de cellule (3) et sont reliés de manière étanche avec ces parois latérales.

9. Accumulateur (1) selon l'une des revendications précédentes, **caractérisé en ce que** les espaces de cellule (3) possèdent respectivement deux éléments de paroi (6) pour réaliser des espaces de volume (8, 9) dans les portions d'espace de cellule contiguës des parois latérales.

10. Accumulateur (1) selon l'une des revendications précédentes, **caractérisé en ce que** les éléments de paroi (6) sont reliés de manière étanche avec une partie couvercle contiguë du boîtier d'accumulateur (2), qui ferme à chaque fois les espaces de cellule (3) par le haut, et la liaison d'équilibrage de pression s'effectue par le biais d'orifices provenant des espaces de volume (8, 9) et passant à travers la partie couvercle.
